(19) Europäisches Patentamt
European Patent Office
Office européen des brevets

(11) Veröffentlichungsnummer: **0 029 007**
**A1**

(12) **EUROPÄISCHE PATENTANMELDUNG**

(21) Anmeldenummer: 80810337.8

(22) Anmeldetag: 03.11.80

(51) Int. Cl.³: C 09 B 57/04
C 08 K 5/34
//C07D401/04, C07D403/04

(30) Priorität: 09.11.79 CH 10046/79

(43) Veröffentlichungstag der Anmeldung: 20.05.81 Patentblatt 81/20

(84) Benannte Vertragsstaaten: CH DE FR GB IT LI

(71) Anmelder: CIBA-GEIGY AG
Patentabteilung Postfach
CH-4002 Basel(CH)

(72) Erfinder: von der Crone, Jost, Dr.
Rheintalweg 90
CH-4125 Riehen(CH)

(54) **Isoindolinpigmente, Verfahren zu deren Herstellung und Verwendung.**

(57) Isoindolinpigmente der Formel

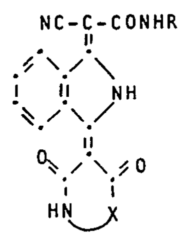

worin R einen Alkylrest mit 1-4 C, der durch eine Hydroxy-, Cyan-, Phenyl- oder Carbamoylgruppe eine Alkoxygruppe mit 1-4 C, eine Aryloxy-, Aryloxycarbonyl-, Aroyloxy- oder Aroylaminogruppe eine Alkoxycarbonyl-, Alkanoyloxy-, Alkylcarbamoyl- oder Alkanoylaminogruppe mit 2-6 C oder eine Phthalimidogruppe substituiert sein kann, oder eine Cycloalkylgruppe mit 5-8 C und X einen Rest der Formel

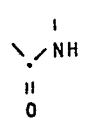 oder 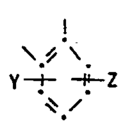

bedeutet, worin Y und Z für H oder Halogenatome, Alkyl- oder Alkoxygruppen mit 1 - 4 C bedeuten. Diese Pigmente eignen sich zum Färben hochmolekularer organischer Verbindungen und zeichen sich durch Reinheit des Farbtones, gute Licht-, Wetter-, Migrations-, Ueberlackier- und Lösungsmittelechtheit sowie Hitzebeständigkeit aus.

EP 0 029 007 A1

Croydon Printing Company Ltd.

CIBA-GEIGY AG
Basel (Schweiz)

3-12596/+

# Isoindolinpigmente, Verfahren zu deren Herstellung und Verwendung

Die vorliegende Erfindung betrifft Isoindolinpigmente der Formel

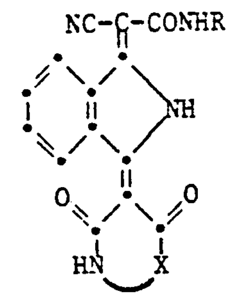

worin R einen Alkylrest mit 1-4 C, der durch eine Hydroxy-, Cyan-, Phenyl- oder Carbamoylgruppe eine Alkoxygruppe mit 1-4 C, eine Aryloxy-, Aryloxycarbonyl-, Aroyloxy- oder Aroylaminogruppe, eine Alkoxycarbonyl-, Alkanoyloxy-, Alkylcarbamoyl- oder Alkanoylaminogruppe mit 2-6 C oder eine Phthalimidogruppe substituiert sein kann oder eine Cycloalkylgruppe mit 5-8 C und X einen Rest der Formel

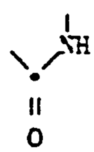

oder

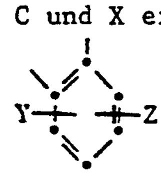

bedeutet, worin Y und Z für H oder Halogenatome, Alkyl- oder Alkoxygruppen mit 1-4 C bedeuten.

In obiger Definition steht die Bezeichnung "Aryl" beispielsweise für α- oder β-Naphthyl oder Diphenylyl vorzugsweise aber für einen gegebenenfalls substituierten Phenylrest. Als Substituenten seien genannt: Halogen, insbesondere Chlor, Alkyl- oder Alkoxy- mit 1-4 C.

Bevorzugt sind jene Pigmente der angegebenen Formel, worin R eine Methyl- oder Aethylgruppe und X den Rest der Formel

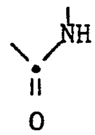 bedeutet.

Zu den erfindungsgemässen Pigmenten gelangt man, wenn man 1,3-Diiminoisoindolin in beliebiger Reihenfolge mit je einem Mol eines Cyanacetamid der Formel $NCCH_2CONHR$ und Barbitursäure oder einem Dihydroxychinolin der Formel

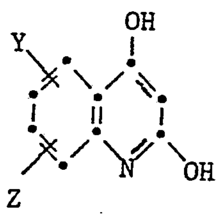

kondensiert.

Als Beispiele von Cyanacetamiden seinen genannt:

Cyanessigsäure- methylamid
Cyanessigsäure-äthylamid
Cyanessigsäure-n-propylamid
Cyanessigsäure-isopropylamid
Cyanessigsäure-n-butylamid
Cyanessigsäure-β-methoxyäthylamid
Cyanessigsäure-β-äthoxyäthylamid
Cyanessigsäure-β-methoxy-n-propylamid
Cyanessigsäure-β-cyanäthylamid
Cyanessigsäure-benzylamid
Cyanessigsäure-α-phenyläthylamid
Cyanessigsäure-β-phenyläthylamid.
Cyanessigsäure-isobutylamid
Cyanessigsäure-cyclohexylamid
Cyanessigsäure-β-hydroxyäthylamid
Cyanessigsäure-β-acetyloxyäthylamid
Cyanessigsäure-β-benzoyloxyäthylamid
Cyanessigsäure-äthoxycarbonylmethylamid

Als Beispiele von Dihydroxychinolinen seien genannt:

2,4-Dihydroxychinolin
2,4-Dihydroxy-6-chlor-chinolin
2,4-Dihydroxy-6-methyl-chinolin
2,4-Dihydroxy-7,8-dichlor-chinolin
2,4-Dihydroxy-6,8-dichlor-chinolin
2,4-Dihydroxy-6,8-dibrom-chinolin.

Das Diiminoisoindolin wird zweckmässig zuerst mit dem Cyanacetamid zum 1-Cyan-carbamoylmethylen-3-imino-isoindolin umgesetzt. Diese Reaktion erfolgt zweckmässig in Wasser oder einem organischen Lösungsmittel bei erhöhter Temperatur vorzugsweise bei 40-120°C. Als organische Lösungsmittel eignen sich beispielsweise aliphatische Alkohole, wie Methanol, Aethanol, Isopropanol, Isobutanol, Amylalkohol oder Aethylenglykolmonoäthyläther, o-Dichlorbenzol, Dimethylformamid, Dimethylacetamid, Dimethylsulfoxyd, N-Methylpyrrolidon, Acetonitril, Dioxan, Nitrobenzol oder Sulfolan.

Die Umsetzung des 1-Cyancarbamoylmethylen-3-iminoisoindolin mit der Barbitursäure oder dem Dihydroxychinolin wird vorzugsweise in Gegenwart einer aliphatischen Carbonsäure wie Ameisensäure, Essigsäure, Propionsäure, Mono- oder Dichloressigsäure durchgeführt.

Diese Reaktion wird zweckmässig bei Temperaturen zwischen 60 - 180° durchgeführt.

Die beiden Stufen können auch ohne Isolierung des Zwischenproduktes im gleichen Gefäss durchgeführt werden. In diesem Falle wählt man als Lösungsmittel zweckmässig Aethylenglykol und Wasser.

Die erhaltenen Pigmente fallen zumeist schon in der Hitze aus und können durch Abfiltrieren und gegebenenfalls durch Waschen mit organischen Lösungsmitteln in reiner Form isoliert werden.

Die erhaltenen Pigmente können meistens als Rohprodukte verwendet werden. Falls nötig oder erwünscht, kann man die Rohprodukte durch Mahlen oder Kneten in eine feindisperse Form überführen. Dabei werden zweckmässig Mahlhilfsmittel, wie anorganische und/oder organische Salze in Gegenwart oder Abwesenheit organischer Lösungsmittel verwendet. Auch durch Behandeln der Rohpigmente mit organischen Lösungsmitteln kann oft eine Verbesserung der Eigenschaften erreicht werden. Nach dem Mahlen werden Hilfsmittel wie üblich entfernt, lösliche anorganische Salze z.B. mit Wasser und wasserunlösliche organische Hilfsmittel beispielsweise durch Wasserdampfdestillation.

Durch die Wahl der Lösungsmittel und der Konditioniertemperatur lässt sich bei der Herstellung der Pigmente die Partikelform stark beeinflussen. So ist es möglich vom gleichen Pigment eine farbstarke, lasierende und eine im Farbton etwas rötere, deckende in der Licht- und Wetterechtheit verbesserte Form herzustellen. Um die gröbere, deckendere Form zu erreichen ist nach der beendeten Kondensation vor allem der Konditionierung in Wasser oder einem Wasser-Säure Gemisch bei Temperaturen von vorzugsweise 100-150° unter Druck geeignet. Die Kristallvergröberung verläuft unter technisch einfachen Bedingungen und ist daher auch vom wirtschaftlichen Standpunkt aus interessant.

Die deckende wie auch die lasierende Form der erfindungsgemässen Pigmente zeichnen sich durch gute Anwendungseigenschaften, insbesondere gutes rheologisches Verhalten, gute Verteilbarkeit und hohe Farbstärke aus. Beide Formen eignen sich zum Färben von hochmolekularem organischem Material natürlicher oder künstlicher Herkunft. Es kann sich z.B. um Naturharze, trocknende Oele oder Kautschuk handeln. Es kann sich aber auch um abgewandelte Naturstoffe handeln, beispielsweise um Chlorkautschuk, um ölmodifizierte Alkydharze oder um Cellulosederivate, wie Viskose, Acetylcellulose und Nitrocellulose, und besonders um vollsynthetische organische Polyplaste, d.h. um Kunststoffe, die durch Polymerisation, Polykondensation und Polyaddition hergestellt sind. Aus der Klasse dieser Kunststoffe seien besonders folgende genannt: Polyäthylen, Polypropylen, Polyisobutylen, Polystyrol, Polyvinylchlorid, Polyvinylacetat, Polyacrylnitril, Polyacrylsäure- und Polymethacrylsäureester; Polyester, insbesondere hochmolekulare Ester aromatischer Polycarbonsäuren mit polyfunktionellen Alkoholen; Polyamide; die Kondensationsprodukte von Formaldehyd mit Phenolen, die sogenannten Phenoplaste, und die Kondensationsprodukte von Formaldehyd mit Harnstoff, Thioharnstoff und Melamin, die sogenannten Aminoplaste; die als Lackharze verwendeten Polyester, und zwar sowohl gesättigte, wie z.B. Alkydharze, als auch ungesättigte, wie beispielsweise Maleinatharze, und ferner die unter dem Namen "Epoxydharze" bekannten Polyadditions- bzw. Polykondensationsprodukte von Epichlorhydrin mit Diolen oder Polyphenolen; ferner die sogenannten Thermoplasten, d.h. die nicht härtbaren Polyplaste. Es sei betont, dass nicht nur die einheitlichen Verbindungen, sondern auch Gemische von Polyplasten, sowie Mischkondensate und Mischpolymerisate, wie z.B. solche auf Basis von Butadien, erfindungsgemäss pigmentiert werden können.

Als weitere hochmolekulare Verbindung seien genannt: Vinyl-, Polyolefin- und Styrolpolymerisate, wie Polyplaste, insbesondere die als Lackrohstoffe bekannten, sogenannten Filmbildnern oder Bindemittel, besonders Leinölfirnis, Nitrocellulose, Alkydharze, Melaminharze und Harnstoff- Formaldehydharze.

Die Pigmentierung der hochmolekularen, organischen Substanzen mit den Pigmenten erfolgt beispielsweise derart, dass das Pigment gegebenenfalls in Form von Masterbatches, diesen Substraten unter Verwendung von Walzwerken, Misch- oder Mahlapparaten zumischt. Das pigmentierte Material wird hierauf nach an sich bekannten Verfahren wie Kalandrieren, Pressen, Strangpressen, Streichen, Giessen oder durch Spritzguss in die gewünschte endgültige Form gebracht. Oft ist es erwünscht, zur Herstellung von nicht starren Formlingen oder zur Verringerung ihrer Sprödigkeit den hochmolekularen Verbindungen vor der Verformung sogenannte Weichmacher einzuverleiben. Als solche können z.B. Ester der Phosphorsäure, Phthalsäure oder Sebacinsäure dienen. Die Weichmacher können im erfindungsgemässen Verfahren vor oder nach der Einverleibung des Pigmentfarbstoffes in die Polyplasten eingearbeitet werden. Es ist ferner möglich, zwecks Erzielung verschiedener Farbtöne den hochmolekularen, organischen Stoffen neben den erfindungsgemässen Pigmenten noch Füllstoffe bzw. andere farbgebende Bestandteile wie Weiss-, Bunt- oder Schwarzpigmente in beliebigen Mengen zuzufügen.

Zum Pigmentieren von Lacken und Druckfarben werden die hochmolekularen organischen Materialien und die Pigmente gegebenenfalls zusammen mit Zusatzstoffen wie Füllmitteln, andern Pigmenten, Siccativen oder Weichmachern, in einem gemeinsamen organischen Lösungsmittel oder Lösungsmittelgemisch fein dispergiert bzw. gelöst. Man kann dabei so verfahren, dass man die einzelnen Komponenten für sich oder auch mehrere gemeinsam dispergiert bzw. löst, und erst hierauf alle Komponenten zusammenbringt.

Die pigmentierten hochmolekularen organischen Materialien enthalten im allgemeinen Mengen von 0,001 bis 30 Gew.-% Pigment, bezogen auf den zu pigmentierenden hochmolekularen organischen Stoff, Polyplasten und Lacke vorzugsweise 0,1 bis 5%, Druckfarben vorzugsweise 10 bis 30%. Die zu wählende Menge an Pigment richtet sich in erster Linie nach der gewünschten Farbstärke, ferner nach der Schichtdicke des Formlings und schliesslich gegebenenfalls auch nach dem Gehalt an Weisspigment im Polyplast.

Sowohl die mit lasierenden als auch die mit deckenden Pigmenten gefärbten hochmolekularen organischen Substanzen weisen sehr echte, gelbe Farbtöne auf und zeichnen sich durch Reinheit des Farbtones, gute Licht-, Wetter-, Migrations-, Ueberlackier- und Lösungsmittelechtheit sowie Hitzebeständigkeit aus. Die Pigmente

weisen auch eine derart gute Farbstärke auf, dass sie selbst nach Ueberführung in eine deckende Form noch farbstarke Färbungen ergeben.

Die folgenden Beispiele veranschaulichen die Erfindung. Darin sind die Temperaturen in Celsiusgraden angegeben.

Beispiel 1: 14,5 g 1-Amino-3-imino-isoindolenin und 4,9 g Cyanessigsäuremethylamid werden in 50 ml Methanol 2 Stunden auf Rückflusstemperatur erwärmt. Das gebildete Reaktionsprodukt wird heiss abgenutscht und getrocknet. Man erhält 10 g hellgelb gefärbtes Monokondensationsprodukt. 4,52 g dieser Verbindung und 2,52 g Barbitursäure werden in 80 ml Essigsäure auf Rückflusstemperatur erwärmt. Das gebildete Pigment wird nach 1 Stunde heiss abgenutscht, mit Methanol, Aceton und Wasser gewaschen und getrocknet. Man erhält 6,6 g eines gelben Farbpulvers, das sich in dieser Form direkt als Pigment in Anstrich- und Kunststoffe einarbeiten lässt. Die damit erzielten Färbungen zeichnen sich durch einen reinen, gelben Farbton aus mit hervorragender Migrations- und Ueberlackierechtheit.

Beispiel 2-13: Analog Beispiel 1 werden die Monokondensationsprodukte aus Cyanacetamiden der Formel $NCCH_2CONHR$ mit Barbitursäure umgesetzt. Die erhaltenen Pigmente lassen sich direkt in Anstrichstoffe einarbeiten. Die damit erzielten Färbungen sind farbstark und zeichnen sich durch einen reinen, gelben Farbton und gute Echtheiten aus. Die Bedeutung des Restes R geht aus den Kolonnen 2 und 4 der nachfolgenden Tabelle hervor.

| Beispiel | R | Beispiel | R |
|---|---|---|---|
| 3 | $-C_2H_5$ | 8 | $-C_2H_4OH$ |
| 4 | $-CH(CH_3)_2$ | 9 | $-CH_2CH_2OCH_3$ |
| 5 | $-CH_2CH(CH_3)_2$ | 10 | $-C_2H_4OCOCH_3$ |
| 6 | $-CH_2-C_6H_5$ | 11 | $-C_2H_4OCOC_6H_5$ |
| 7 | $-C_2H_4-C_6H_5$ | 12 | $-CH_2COOC_2H_5$ |
| | | 13 | -Cyclohexyl |

Beispiel 14 und 15: Man verfährt wie in Beispiel 1, suspendiert aber das feuchte Rohpigment in einer Mischung aus 20 ml Eisessig und 80 ml Wasser. Anschliessend wird die Suspension unter Druck während 3 Stunden auf 120° erhitzt. Man erhält 6,4 g eines grünstichigen, deckenden Gelbpigmentes mit verbesserter Licht- und Wetterechtheit. Verwendet man anstelle des Pigmentes aus Beispiel 1 das feuchte Rohpigment aus Beispiel 3 so erhält man bei gleicher Arbeitsweise durch Erhitzen auf 110° ebenfalls ein grünstichiges, deckendes Gelbpigment mit verbesserter Licht- und Wetterechtheit.

Beispiel 16: Zu einer Suspension von 4,9 g Cyanessigsäuremethylamid und 6,4 g Barbitursäure in 75 ml Wasser lässt man eine auf 60° erwärmte Lösung aus 7,25 g Amino-iminoisoindolenin und 40 ml Aethylenglykol zulaufen.

Das Reaktionsgemisch wird 2 Stunden bei 60° gerührt und anschliessend mit 15 ml Ameisensäure angesäuert. Nach weiteren 2 Stunden Rührzeit heizt man auf 90°, nutscht ab und trocknet. Man erhält 14,5 g des in Beispiel 1 beschriebenen Pigmentes.

Beispiel 17: 4,52 g des in Beispiel 1 beschriebenen Monokondensationsproduktes und 2,52 g Barbitursäure werden in einer Mischung aus 80 ml Wasser und 20 ml Essigsäure während 5 Stunden auf Rückflusstemperatur erhitzt. Das gebildete Pigment wird heiss abgenutscht, mit Wasser gewaschen und getrocknet. Man erhält 6,2 g Pigment, das sich in dieser Form direkt mit guter Verteilbarkeit in Drucktinten einarbeiten lässt. Die damit erzielten Färbungen zeichnen sich durch hohe Farbstärke und einen brillianten gelben Farbton aus, die eine hohe Lichtechtheit aufweisen.

Beispiel 18: 2,26 des nach Beispiel 1 hergestellten Monokondensationsproduktes und 1,61 g 2,4-Dihydroxychinolin werden in 50 ml Essigsäure auf Rückflusstemperatur erwärmt. Man verdünnt mit 20 ml o-Dichlorbenzol und nutscht nach 2 Stunden das gebildete Pigment heiss ab. Es wird mit Methanol, Aceton und Wasser gewaschen und getrocknet. Man erhält 2,5 g eines orangen Farbpulvers, das sich in dieser Form direkt als Pigment in Anstrichstoffe einarbeiten lässt. Die damit erzielten Färbungen zeichnen sich durch einen reinen Farbton und gute Ueberlackierechtheit aus.

Beispiel 19-29: Ersetzt man in Beispiel 18 das Monokondensat durch äquimolare Mengen der Verbindungen der Formel:

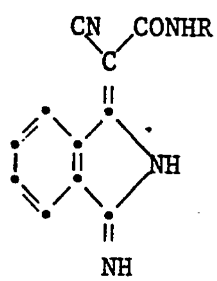

worin R die in Kolonne 2 der nachfolgenden Tabelle angegebene Bedeutung hat, und verwendet das in Kolonne 3 angegebene Dioxychinolin in äquimolaren Mengen, so erhält man ebenfalls Pigmente mit ähnlich guten Eigenschaften.

| Beispiel | R | Dihydroxychinolin | Farbton |
|---|---|---|---|
| 19 | $-C_2H_5$ | 2,4-Dioxychinolin | rotst. gelb |
| 20 | $-C_2H_4OCH_3$ | " | " |
| 21 | $-C_2H_4OCOCH_3$ | " | orange |
| 22 | $-C_2H_4OCOC_6H_5$ | " | gelbst. orange |
| 23 | $-CH_2C_6H_5$ | " | rotst. gelb |
| 24 | $-CH_3$ | 7-Chlor-2,4-dioxychinolin | rotst. gelb |
| 25 | $-C_2H_5$ | 7-Chlor-2,4-dioxychinolin | gelb |

| Beispiel | R | Dihydroxychinolin | Farbton |
|---|---|---|---|
| 26 | $-C_2H_5$ | 6,8-Dibrom-2,4-dioxychinolin | gelb |
| 27 | $-C_2H_4OH$ | 6,8-Dibrom-2,4-dioxychinolin | rotst. gelb |
| 28 | $-CH_3$ | 6-Methyl-2,4-dioxychinolin | gelbst. orange |
| 29 | $-CH_3$ | 6,8-Dichlor-2,4-dioxychinolin | rotst. gelb |

Beispiel 30: 0,6 g des nach Beispiel 17 hergestellten Pigments werden mit 67 g Polyvinylchlorid, 33 g Dioctylphthalat, 2 g Dibutylzinndilaurat und 2 g Titandioxyd zusammengemischt und auf einem Walzenstuhl während 15 Minuten bei 160°C zu einer dünnen Folie verarbeitet. Die so erzeugte gelbe Färbung ist farbstark, migrations-, hitze- und lichtecht.

Beispiel 31: 1,00 g des nach Beispiel 17 hergestellten Pigments wird mit 4,00 g Druckfirnis der Zusammensetzung

29,4 % Leinöl-Standöl (300 Poise),
67,2 % Leinöl-Standöl ( 20 Poise),
2,1 % Kobaltoctoat ( 8 % Co) und
1,3 % Bleioctoat ( 24 % Pb)

auf einer Engelsmann-Anreibmaschine fein angerieben und hierauf mit Hilfe eines Klischees im Buchdruckverfahren mit 1 $g/m^2$ auf Kunstdruckpapier gedruckt. Man erhält starke, gelbe Drucke von guter Transparenz und gutem Glanz und guter Lichtechtheit.

Das Pigment eignet sich auch für andere Druckverfahren, wie Tiefdruck, Offsetdruck, Flexodruck und ergibt hier ebenfalls sehr gute Resultate.

Beispiel 32: Zu 100 g eines Einbrennlackes, der aus 58,5 g einer 60%-igen Lösung eines Kokosalkydharzes in Xylol, 23 g einer 65%-igen Lösung eines Melaminlackharzes in Butanol, 17 g Xylol und 1,5 g Butanol besteht, gibt man 1 g des Pigmentes gemäss Beispiel 1 und 5 g Titandioxyd. Man mahlt das Gemisch 48 Stunden in einer Kugelmühle und spritzt den so pigmentierten Lack auf eine gereinigte Metalloberfläche. Nach dem Einbrennen bei 120° erhält man eine gelbe Färbung von guter Farbstärke, Licht-, Ueberlackier- und Wetterechtheit.

Patentansprüche

1. Isoindolinpigmente der Formel

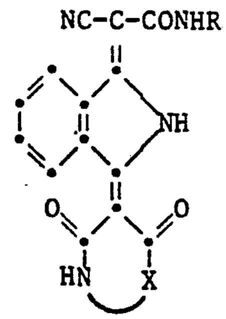

worin R einen Alkylrest mit 1-4 C,der durch eine Hydroxy-, Cyan-, Phenyl- oder Carbamoylgruppe eine Alkoxygruppe mit 1-4 C, eine Aryloxy-, Aryloxycarbonyl-, Aroyloxy- oder Aroylaminogruppe eine Alkoxycarbonyl-, Alkanoyloxy-, Alkylcarbamoyl- oder Alkanoylaminogruppe mit 2-6 C oder eine Phthalimidogruppe substituiert sein kann, oder eine Cycloalkylgruppe mit 5-8 C und X einen Rest der Formel

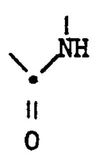 oder 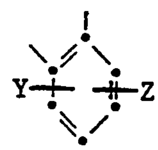

bedeutet, worin Y und Z für H oder Halogenatome, Alkyl- oder Alkoxygruppen mit 1 - 4 C bedeuten.

2. Isoindolinpigmente gemäss Anspruch 1, worin R die Methyl- oder Aethylgruppe bedeutet.

3. Isoindolinpigmente gemäss Anspruch 1,worin X den Rest der Formel

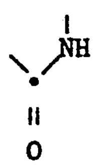

bedeutet.

4. Verfahren zur Herstellung von Isoindolinpigmenten gemäss Anspruch 1, dadurch gekennzeichnet, dass man 1,3-Diiminoisoindolin in beliebiger Reihenfolge mit je einem Mol eines Cyanacetamides der Formel $NCCH_2CONHR$ und Barbitursäure oder einem Dihydroxychinolin der Formel

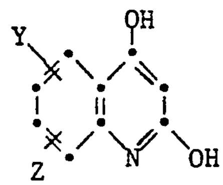

kondensiert.

5. Verfahren gemäss Anspruch 4, dadurch gekennzeichnet, dass man in erster Stufe das Diiminoisoindolin mit dem Cyanacetamid und in zweiter Stufe mit der Barbitursäure oder dem Dihydroxychinolin kondensiert.

6. Verfahren gemäss Anspruch 4, dadurch gekennzeichnet, dass man ein Cyanacetamid der angegebenen Formel verwendet, worin R die Methyl- oder Aethylgruppe bedeutet.

7. Verfahren gemäss Anspruch 5, dadurch gekennzeichnet, dass man in zweiter Stufe mit Barbitursäure kondensiert.

8. Verfahren gemäss Anspruch 5, dadurch gekennzeichnet, dass man die Kondensation der zweiten Stufe bei Temperatur zwischen 60° und 140° durchführt.

9. Verfahren gemäss Anspruch 4, dadurch gekennzeichnet, dass man das erhaltene Pigment zwecks Rekristallisation einer Lösungsmittelbehandlung bei 100-150° unterwirft.

10. Verfahren zum Pigmentieren von hochmolekularem organischem Material, gekennzeichnet durch die Verwendung der Isoindoline gemäss Anspruch 1.

11. Hochmolekulares organisches Material enthaltend als Pigment ein Isoindolin gemäss Anspruch 1.

Europäisches Patentamt

# EUROPÄISCHER RECHERCHENBERICHT

Nummer der Anmeldung

EP 80 81 0337

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | FR - A - 1 537 299 (BAYER)<br>* Seite 1, Formel 1-3; Seite 3, linke Spalte, Zeile 28 bis rechte Spalte, Zeile 11; Seite 4, linke Spalte, Zeilen 8-19 und von rechte Spalte, Zeile 13 bis Seite 5, rechte Spalte, Zeile 29; Beispiel 76 *<br>& DE - A - 1 670 748<br>-- | 1-5, 7-11 |
| | FR - A - 2 135 259 (BASF)<br>* Seite 1, Zeilen 1-30; Beispiele 28-55 *<br>& DE - A - 2 121 524<br>-- | 1-3 |
| | FR - A - 2 307 008 (CIBA-GEIGY)<br>* Seite 3, letzte Formel; Seite 6, Zeilen 8-11; Seite 7, Zeilen 17-26 *<br>& DE - A - 2 615 394<br>-- | 1 |
| PEX | EP - A - 0 017 214 (BASF)<br>* Beispiele 1-5 *<br>-- | 1-11 |
| PA | DE - A - 2 831 673 (BASF) | |
| PA | DE - A - 2 800 815 (BASF)<br>---- | |

**KLASSIFIKATION DER ANMELDUNG (Int. Cl.³)**

C 09 B 57/04
C 08 K 5/34//
C 07 D 401/04
403/04

**RECHERCHIERTE SACHGEBIETE (Int. Cl.³)**

C 09 B 57/04
C 07 D 401/04
403/04

**KATEGORIE DER GENANNTEN DOKUMENTE**

- X: von besonderer Bedeutung
- A: technologischer Hintergrund
- O: nichtschriftliche Offenbarung
- P: Zwischenliteratur
- T: der Erfindung zugrunde liegende Theorien oder Grundsätze
- E: kollidierende Anmeldung
- D: in der Anmeldung angeführtes Dokument
- L: aus andern Gründen angeführtes Dokument
- &: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Den Haag | 16-01-1981 | DAUKSCH |